# EUROPÄISCHE PATENTANMELDUNG

(11) **EP 4 603 334 A1**
(43) Veröffentlichungstag der Anmeldung: **20.08.2025**
(21) Anmeldenummer: 25151959.1
(22) Anmeldetag: 15.01.2025
(51) Int. Cl.: B60Q 3/60, F21V 7/00, F21Y 115/10, F21S 43/14

(54) **LEUCHTVORRICHTUNG FÜR EINEN INNENRAUM EINES FAHRZEUGS**

(30) Priorität: 16.02.2024 DE 102024201452
(71) Anmelder: Stellantis Auto SAS, 78300 Poissy (FR)
(72) Erfinder: FROMMANN, Markus, 65428 Rüsselsheim am Main (DE); BOECHER, Nicolas, 65428 Rüsselsheim am Main (DE)
(74) Vertreter: BCIP

(57) **Zusammenfassung**

Eine Leuchtvorrichtung (1) für einen Innenraum eines Fahrzeugs wird bereitgestellt. Die Leuchtvorrichtung umfasst ein Gehäuse (2) sowie einen flächigen, im Wesentlichen axialsymmetrisch ausgebildeten, Leuchtkörper (6) zum Erzeugen einer Leuchtstruktur innerhalb des Gehäuses (2). Die Leuchtvorrichtung (1) umfasst ferner wenigstens eine im Wesentlichen parallel zu dem flächigen Leuchtkörper (6) ausgebildete flächige Lichtkammer (20), und wenigstens eine Lichtquelle (3) zum Erzeugen eines radial gerichteten Lichts zum Einspeisen in die wenigstens eine Lichtkammer (20) Die wenigstens eine Lichtkammer (20) umfasst zudem wenigstens einen Lichtauslass mit wenigstens einem Umlenkspiegel (21) zum Umlenken des in die wenigstens eine Lichtkammer (20) eingespeisten Lichts in Richtung des Leuchtkörpers (6), so dass der Leuchtkörper lokal angeleuchtet werden kann. Ferner wird ein Fahrzeug bereitgestellt. Das Fahrzeug weist wenigstens einen Innenraum mit wenigstens einer Leuchtvorrichtung (1) zur lichttechnischen Gestaltung des Innenraums des Fahrzeugs auf.

## Beschreibung

Die vorliegende Offenbarung betrifft im Allgemeinen eine Leuchtvorrichtung. Im Speziellen betrifft die vorliegende Offenbarung eine Leuchtvorrichtung für einen Innenraum eines Fahrzeugs sowie ein die Leuchtvorrichtung aufweisendes Fahrzeug.

Es sind Leuchtvorrichtungen für Fahrzeuginnenräume bekannt. Es sind ferner Leuchtvorrichtung mit LEDs (Licht emittierende Dioden) als Lichtquellen bekannt. Die Leuchtvorrichtungen können zum Beleuchten von Fahrzeuginnenräumen und/oder als Dekorationsleuchten bzw. Akzentleuchten ausgebildet sein. Es sind insbesondere Leuchtvorrichtungen zum Erzeugen von leuchtenden Strukturen bekannt. Solche Leuchtvorrichtungen weisen in der Regel einen komplexen Aufbau auf und benötigen verhältnismäßig großen Bauraum. Zudem ist die Erzeugung von leuchtenden Strukturen bzw. Leuchtstrukturen mit einem hohen Verlust an Lichtausbeute verbunden.

Eine Aufgabe der Ausführungsformen der vorliegenden Offenbarung ist es, eine visuell ansprechende Leuchtvorrichtung mit geringem Bauraum und hoher Lichtausbeute für einen Innenraum eines Fahrzeugs bereitzustellen.

Zur Lösung dieser Aufgabe wird nach einem ersten Aspekt eine Leuchtvorrichtung für einen Innenraum eines Fahrzeugs bereitgestellt. Die Leuchtvorrichtung umfasst ein Gehäuse sowie einen flächigen, im Wesentlichen axialsymmetrisch ausgebildeten Leuchtkörper mit einer Rückseite und mit einer der Rückseite gegenüberliegenden Vorderseite zum Erzeugen einer Leuchtstruktur innerhalb des Gehäuses. Der Leuchtkörper kann insbesondere eine im Wesentlichen symmetrische, beispielsweise rotationssymmetrische, Form bezüglich einer Symmetrieachse aufweisen.

Die Leuchtvorrichtung umfasst ferner wenigstens eine Lichtkammer zum Anleuchten der Rückseite des Leuchtkörpers und wenigstens eine Lichtquelle zum Erzeugen eines radial gerichteten Lichts zum Einspeisen in die wenigstens eine Lichtkammer. Insbesondere kann die wenigstens eine Lichtquelle, insbesondere eine LED-Lichtquelle, eine vordefinierte Abstrahlcharakteristik mit einer bezüglich der Symmetrieachse des Leuchtkörpers radial ausgerichteten Hauptabstrahlrichtung aufweisen. Insbesondere kann die wenigstens eine Lichtkammer wenigstens einen Lichteinlass aufweisen, so dass das von der wenigstens einen Lichtquelle erzeugte Licht in die wenigstens eine Lichtkammer eingespeist werden kann.

Die wenigstens eine Lichtkammer umfasst wenigstens einen Lichtauslass mit wenigstens einen Umlenkspiegel zum Umlenken des in die wenigstens eine Lichtkammer eingespeisten Lichts in Richtung des Leuchtkörpers, so dass der Leuchtkörper lokal bzw. gezielt ausgeleuchtet werden kann.

Insbesondere kann die wenigstens eine Lichtkammer dazu ausgebildet sein, den Leuchtkörper, insbesondere einen oder mehrere Bereiche des Leuchtkörpers, gezielt auszuleuchten. Aufgrund des gezielten Ausleuchtens des Leuchtkörpers kann die Leuchthelligkeit der Leuchtstruktur lokal deutlich erhöht werden, so dass die visuelle Wahrnehmbarkeit der Leuchtstruktur erhöht werden kann. Insbesondere kann dadurch eine vorgegebene Zielhelligkeit der Leuchtstruktur mit weniger elektrischer Leistung bzw. mit weniger LEDs erzielt werden. Aufgrund der radialen Anordnung der Lichtquellen und des flächigen Aufbaus der Lichtkammer kann eine besonders flache bzw. kompakte Bauweise der Leuchtvorrichtung mit geringer Bautiefe erreicht werden.

Der wenigstens eine Umlenkspiegel kann insbesondere dem wenigstens einen Lichtauslass vorgeschaltet sein, um das Licht zu dem wenigstens einen Lichtauslass zu lenken. Durch das Umlenken des Lichts zu dem wenigstens einen Lichtauslass bzw. zu dem Leuchtkörper mittels des Umlenkspiegels kann die Lichtausbeute der Leuchtvorrichtung bzw. die Leuchthelligkeit der Leuchtstruktur erhöht werden.

Der Umlenkspiegel kann wenigstens abschnittsweise als Freiformreflektor zum gezielten Ausleuchten des Leuchtkörpers ausgebildet sein. Insbesondere kann der Freiformreflektor eine auf die Form bzw. auf die Tiefe der Lichteinheit und/oder der Form des Leuchtkörpers angepasste Form aufweisen, um das von der wenigstens einen Lichtquelle erzeugte Licht zu erfassen und auf die Rückseite des Leuchtkörpers zu lenken. Dadurch kann die Lichtausbeute der Leuchtvorrichtung speziell bei größerer Bautiefe bzw. bei schmalen Leuchtkörpern erhöht werden.

Der Umlenkspiegel kann in Form einer Spiegelschräge ausgebildet sein, wobei die Spiegelschräge wenigstens eine zum flächigen Leuchtkörper um ca. 45°-Winkel geneigte Spiegelfläche umfasst. Durch die 45°-Neigung der Spiegelfläche kann das Licht beim Eintreffen auf die Spiegelschräge direkt zum Leuchtkörper umgelenkt werden, wodurch die Lichtausbeute und die Leuchthelligkeit der Leuchtstruktur speziell bei einer flachen Bauweise der Leuchtvorrichtung auf besonders effiziente und einfache Weise erhöht werden kann.

In einigen Ausführungsbeispielen umfasst die wenigstens eine Lichtkammer einen nach innen verspiegelten Boden und/oder einen dem verspiegelten Boden gegenüberliegenden nach innen verspiegelten Deckel, wodurch die Lichtausbeute weiter erhöht und eine gute Lichtdurchmischung gewährleistet werden kann. Der verspiegelte Boden bzw. der verspiegelte Deckel der Lichtkammer können insbesondere zusammen mit dem Umlenkspiegel eine große Lichtbooster-Kammer ergeben. In Kombination mit den verspiegelten Seitenwänden können nach innen im Wesentlichen vollständig verspiegelte Kammersegmente mit erhöhtem Booster-Effekt gebildet werden.

Die wenigstens eine Lichtkammer kann eine Anzahl von radialen Kammersegmenten mit jeweils einem Lichteinlass an einem inneren Ende und mit jeweils einem Lichtauslass an einem äußeren Ende umfassen. Insbesondere können die Kammersegmente im Wesentlichen ähnlich wie Pizzastücke ausgebildet sein, so dass im Betrieb das Licht von dem Lichteinlass an dem inneren Ende zu dem Lichtauslass an dem äußeren Ende im Wesentlichen radial ausbreiten kann. Mit solchen "Pizzasegmenten" können insbesondere kreisförmig angeordnete bzw. ringförmig ausgebildete Leuchtstrukturen am "Pizzarand" auf besonders effiziente Weise erzeugt werden.

Die Kammersegmente können im Wesentlichen radial ausgerichtete nach innen verspiegelte Seitenwände umfassen. An den nach innen verspiegelten Seitenwände können insbesondere Reflexionen bzw. Mehrfachreflexionen stattfinden, so dass das in der Lichtkammer eingefangene Licht auf effiziente Weise zu dem Leuchtkörper geführt werden kann.

In einigen Ausführungsbeispielen umfasst die Leuchtvorrichtung eine Anzahl von Lichtquellen, wobei die Lichtquellen einzeln oder gruppenweise den jeweiligen Lichteinlässen zugeordnet sind. Mit anderen Worten sind die Lichtquellen, beispielsweise LED-Lichtquellen, so angeordnet, dass das von unterschiedlichen Lichtquellen bzw. unterschiedlichen Gruppen von Lichtquellen erzeugte Lichter in unterschiedliche Kammersegmente eingespeist werden können. Mit separat bzw. gruppenweise steuerbaren Lichtquellen kann insbesondere erreicht werden, dass unterschiedliche Bereiche des Leuchtkörpers voneinander unabhängig angeleuchtet werden, um die lichttechnische Gestaltungsvielfalt der Leuchtvorrichtung zu erhöhen.

Die Leuchtvorrichtung kann wenigstens ein Lichtquellencluster mit mehreren Lichtquellen umfassen, wobei zu unterschiedlichen Lichteinlässen zugeordnete Lichtquellen auf einer gemeinsamen Trägerplatte montiert sein können. Insbesondere können die Lichtquellen des Lichtclusters jeweils eine radial ausgerichtete Hauptabstrahlrichtung aufweisen. Durch die radiale Ausrichtung der Hauptabstrahlrichtung von einzelnen Lichtquellen kann das Licht auf besonders effiziente Weise in die flächige Lichtkammer eingespeist werden. Die auf einem gemeinsamen Träger montierten Lichtquellen können zudem als eine Einheit auf einfache Weise montiert werden.

In einigen Ausführungsbeispielen umfasst die Leuchtvorrichtung eine Doppelspiegelanordnung, wobei die Doppelspiegelanordnung derart ausgebildet ist, dass die Leuchtstruktur an unterschiedlichen Tiefenebenen innerhalb des Gehäuses mehrfach erscheinen kann. Durch das Erscheinen der Leuchtstruktur an unterschiedlichen Tiefenebenen kann neben einem Volumeneffekt ein visueller Unendlichkeitseffekt bzw. Infinity Effect, insbesondere eine Illusion sich unendlich wiederholender Strukturen, entstehen.

Die Doppelspiegelanordnung kann einen im Wesentlichen nichttransparenten bzw. lichtundurchlässigen Spiegel mit einer der wenigstens einen Lichtquelle abgewandte Spiegeloberfläche umfassen. Insbesondere kann die Doppelspiegelanordnung derart ausgebildet sein, dass das von dem Leuchtkörper abgestrahlte und innerhalb der Spiegelanordnung zurückreflektierte Licht von der der Lichtquelle abgewandten Spiegeloberfläche wieder nach vorne reflektiert wird. Die dabei auftretenden Mehrfachreflexionen können zur Verstärkung des visuellen Effekts der sich wiederholenden Strukturen führen.

Der nichttransparente Spiegel kann mit einer der wenigstens einen Lichtkammer zugewandten Seite an dem Leuchtkörper anliegen. Insbesondere kann der nichttransparente Spiegel so ausgebildet sein, dass wenigstens ein Teil des Leuchtkörpers durch den nichttransparenten Spiegel abgedeckt wird, wobei ein nichtabgedeckter Teil des Leuchtkörpers als strukturierter Leuchtkörper bzw. als Lichtstruktur erscheinen kann. Somit kann der nichttransparente Spiegel sowohl zur Erzeugung von Mehrfachreflexion in der Spiegelanordnung als auch zur Erzeugung der Leuchtstruktur verwendet werden.

Die Doppelspiegelanordnung kann ferner wenigstens einen dem im Wesentlichen nichttransparenten Spiegel nachgeschalteten teildurchlässigen Spiegel umfassen. Der wenigstens eine teildurchlässige Spiegel kann insbesondere eine bestimmte Transparenz aufweisen. Insbesondere kann der teildurchlässige Spiegel so ausgebildet sein, dass ein bestimmter Teil des auf den teildurchlässigen Spiegel einfallenden Lichtes durchgelassen wird. Ein bestimmter Teil des einfallenden Lichts kann spiegelreflektiert auf den nichttransparenten Spiegel zur erneuten Reflexion zurückgeworfen werden. Somit kann eine Art Light-Recycling wiederholt stattfinden, insbesondere bis das Licht nach außen gelangt. Der Anteil des von dem teildurchlässigen Spiegel zurückgeworfenen Lichts bestimmt dabei die Light-Recycling-Effizienz und beeinflusst die relative Helligkeit der auf unterschiedlichen Tiefenebenen erscheinenden Leuchtstrukturen.

Je nach Ausführung kann der teildurchlässige Spiegel eine Transparenz zwischen 20 % und 80 %, insbesondere zwischen 40 % und 60 %, speziell zwischen 45 % und 55 % aufweisen. Insbesondere kann die Wahl der Transparenz anhand der designtechnischen Anforderungen an die Leuchtvorrichtung erfolgen. In einigen Ausführungsbeispielen weist der teildurchlässige Spiegel eine Transparenz von ungefähr 50 % auf, was einen hohen Grad, insbesondere für viele Anwendungen ausreichenden Grad, an Light-Recycling bei einer hohen Lichtausbeute ermöglicht.

Der teildurchlässige Spiegel kann in Form einer Spiegelfolie und/oder Spiegelschicht bzw. Spiegelbeschichtung auf einem im Wesentlichen lichtdurchlässigen, insbesondere transluzenten und/oder transparenten, Träger ausgebildet sein. Der Träger kann dabei sowohl zur Halterung der Spiegelfolie als auch optisches Element zur Beeinflussung der Leuchteigenschaften der Leuchtvorrichtung dienen. Der Träger des teildurchlässigen Spiegels kann gleichzeitig als Abschlussplatte bzw. als Lichtaustrittsfenster der Leuchtvorrichtung fungieren.

In einigen Ausführungsbeispielen weist der Träger eine Transmission von mehr als 50 %, insbesondere mehr als 80 %, speziell mehr als 85 %, noch spezieller mehr als 89 %, auf. In einigen Ausführungsbeispielen ist der Träger aus Kunststoff beispielsweise aus Polycarbonat gebildet. Die Transmission des Trägers kann insbesondere anhand der designtechnischen Anforderungen gewählt werden. In einigen Ausführungen weist der Träger eine Strukturierung bzw. Beschriftung auf, welche insbesondere in Kombination mit einer hohen Transmission des Trägers quasi als im Raum schwebend an der Vorderseite der Leuchtvorrichtung erscheinen kann.

Das Gehäuse kann eine im Wesentlichen axialsymmetrische Seitenwand aufweisen, wobei der Leuchtkörper und die Doppelspiegelanordnung der wenigstens einen Lichtkammer in axialer Richtung nachgeschaltet und im Wesentlichen planparallel zu der wenigstens einen Lichtkammer ausgebildet sein kann. Durch die planparallele Ausbildung der Komponenten der Leuchtvorrichtung kann insbesondere erzielt werden, dass sich die visuell wahrnehmbaren Strukturen in regelmäßigen Abständen wiederholen.

Nach einem zweiten Aspekt wird ein Fahrzeug vorgeschlagen. Das Fahrzeug weist wenigstens einen Innenraum mit wenigstens einer Leuchtvorrichtung nach dem ersten Aspekt zur lichttechnischen Gestaltung des Innenraums des Fahrzeugs auf. Durch die gezielte Ausleuchtung des Leuchtkörpers und durch den flachen Aufbau der Lichtkammer kann eine Leuchtvorrichtung realisiert werden, welche eine für Fahrzeuginsassen gut wahrnehmbare Leuchtstruktur bereitstellt und gleichzeitig wenig Bauraum beansprucht.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch eine Leuchtvorrichtung gemäß einem Ausführungsbeispiel in unterschiedlichen Ansichten,
- Fig. 2: zeigt schematisch die Leuchtvorrichtung gemäß Fig. 1 in einer Explosionsansicht,
- Fig. 3: zeigt eine vergrößerte perspektivische Ansicht der Lichtkammer gemäß einem Ausführungsbeispiel,
- Fig. 4: zeigt eine perspektivische Detailansicht der Leuchtvorrichtung gemäß einem Ausführungsbeispiel,
- Fig. 5: zeigt eine perspektivische Ansicht einer Lichteinheit gemäß einem Ausführungsbeispiel,
- Fig. 6: zeigt eine perspektivische Ansicht einer Lichteinheit gemäß einem anderen Ausführungsbeispiel,
- Fig. 7: zeigt eine Querschnittsansicht einer Lichteinheit in zwei unterschiedlichen Ausführungen, und
- Fig. 8: zeigt eine schematische perspektivische Ansicht einer Leuchtvorrichtung gemäß einem Ausführungsbeispiel im Betrieb.

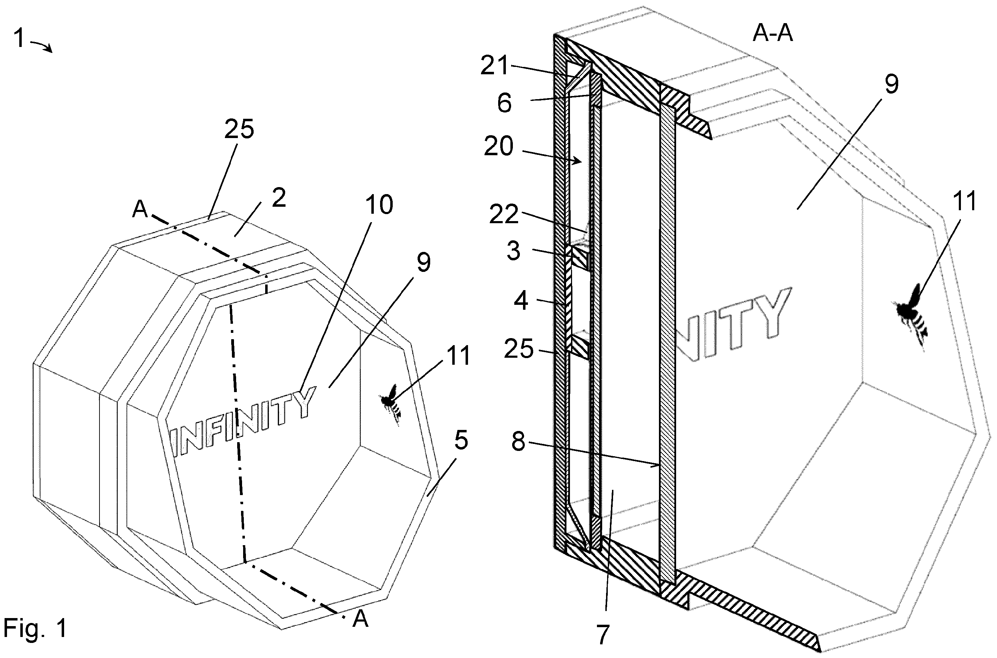

Fig. 1 zeigt schematisch eine Leuchtvorrichtung gemäß einem Ausführungsbeispiel in unterschiedlichen Ansichten. Insbesondere zeigt Fig. 1 eine perspektivische Ansicht (links im Bild) und einen perspektivischen Querschnitt (Schnittebene A-A links rechts im Bild).

Die Leuchtvorrichtung 1 umfasst ein Gehäuse 2 sowie eine Anzahl von Lichtquellen 3, wobei die Lichtquellen 3 auf einer Trägerplatte 4 bzw. Trägerplatine auf dem Gehäuseboden 25 des Gehäuses 2 angeordnet sind. Die Lichtquellen 3 sind als LEDs bzw. LED-Lichtquellen ausgebildet und auf der Trägerplatte 4 kreisförmig angeordnet. Die Lichtquellen 3 weisen jeweils eine radial nach außen gerichtete Hauptabstrahlrichtung auf. Das Gehäuse 2 ist im Wesentlichen axialsymmetrisch ausgebildet und weist einen oktogonalen Querschnitt auf.

Die Leuchtvorrichtung 1 umfasst ferner eine Lichtkammer 20 mit einer Anzahl von radialen Kammersegmenten mit jeweils einem Lichteinlass an einem inneren Ende und mit jeweils einem Lichtauslass an einem äußeren Ende. Zu jedem Lichteinlass der Kammersegmente ist eine Lichtquelle 3 zugeordnet. Die Kammersegmente der Lichtkammer 20 sind so ausgebildet, dass das von den Lichtquellen 3 erzeugte Licht durch den jeweiligen Lichteinlass in die Lichtkammer 20 gelangen und durch den jeweiligen Lichtauslass die Lichtkammer 20 verlassen können. Der Lichtkammer 20 ist ein Leuchtkörper in Form eines Diffusors 6 nachgeschaltet, so dass bestimmte Stellen im Randbereich des Diffusors 6 gezielt ausgeleuchtet werden können. In diesem Ausführungsbeispiel ist der Diffusor 6 auch gleichzeitig als Träger für einen Spiegel 7 bzw. Vollspiegel ausgeführt. Ein Trägerbereich des Diffusors 6 ist zum Aufnehmen bzw. Tragen des Spiegels 7 ausgebildet und ist im Vergleicht zu dem "Haupt-Diffusor-Bereich" am Rande des Diffusors 6 stark verdünnt ausgeführt. Durch die Verdünnung des Diffusors 6 in dem Trägerbereich kann insbesondere der Anteil des in den radial nach innen liegenden Trägerbereich des Diffusors eingekoppelten Lichts reduziert werden. Stirnseitig weist die Leuchtvorrichtung 1 eine Abschlussplatte 9 mit einer Aufschrift 10 sowie eine Frontmaske 5 mit einem Piktogramm 11 auf.

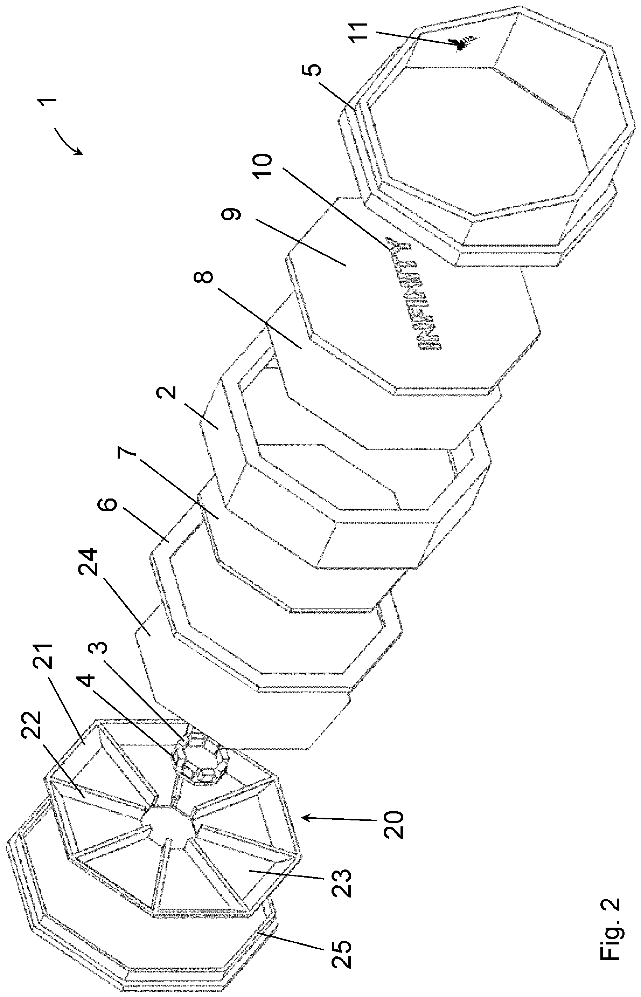

Fig. 2 zeigt schematisch die Leuchtvorrichtung gemäß Fig. 1 in einer Explosionsansicht. In der Explosionsansicht ist die Anordnung von einzelnen Komponenten der Leuchtvorrichtung 1 besonders gut zu sehen. Insbesondere ist in Fig. 2 der Aufbau der segmentierten Lichtkammer 20 deutlich zu sehen.

In dem gezeigten Ausführungsbeispiel umfasst die Lichtkammer 20 acht Kammersegmente, welche sich radial nach außen erstrecken, wobei am äußeren Ende der Kammersegmente jeweils ein Umlenkspiegel 21 vorgesehen ist. Die Lichtkammersegmente weisen jeweils nach innen reflektierende bzw. verspiegelte, radial ausgerichtete Seitenwände 22 auf.

Die Lichtkammer 20 bzw. die Kammersegmente weisen ferner einen nach innen verspiegelten Boden 23 und einen nach innen verspiegelten Deckel 24 auf. Der Deckel 24 ist so bemessen, dass am äußeren Ende des jeweiligen Kammersegments ein freier Spalt zwischen dem Deckel 24 und dem Umlenkspiegel 21 bleibt. Der Spalt kann somit als Lichtauslass des jeweiligen Kammersegments fungieren, durch welchen das Licht aus der Lichtkammer 20 austreten kann.

Im Unterschied zu Fig. 1 ist in Fig. 2 ein teildurchlässiger Spiegel 8 zu sehen. In Fig. 1 ist der teildurchlässige Spiegel 8 nicht zu sehen. Denn der teildurchlässige Spiegel 8 kann auch ausgelassen werden oder in Form einer dünnen Beschichtung auf der Innenseite der Abschlussplatte 9 ausgebildet sein.

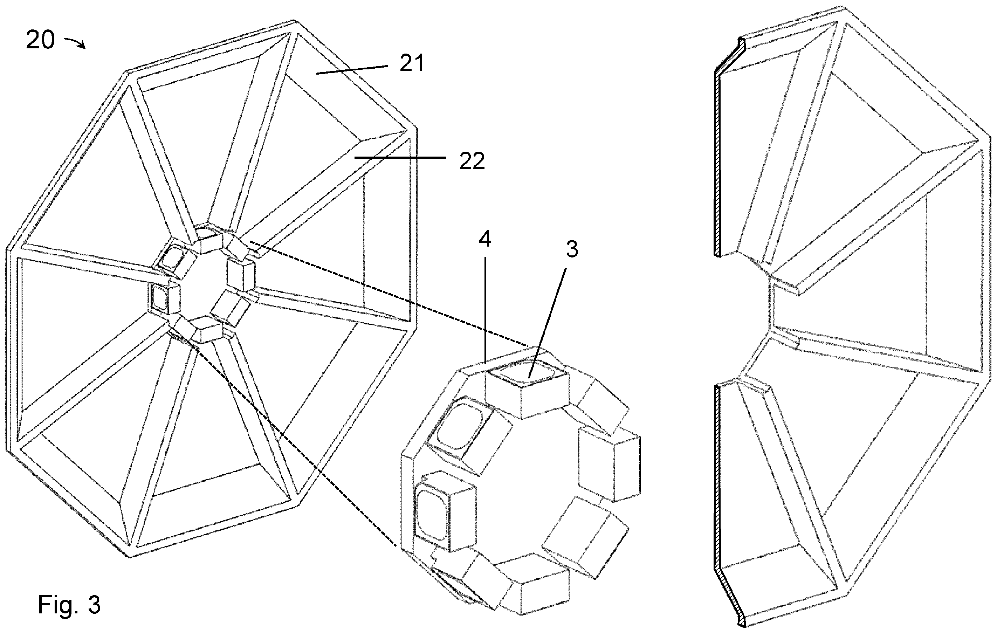

Fig. 3 zeigt eine vergrößerte perspektivische Ansicht der Lichtkammer gemäß einem Ausführungsbeispiel. Insbesondere wird in Fig. 3 die Lichtkammer 20 ohne Deckel 24 und vergrößert dargestellt, um den Aufbau der Lichtkammer 20 zu verdeutlichen. Fig. 3 zeigt auch eine Detailansicht der Anordnung der Lichtquellen 3 (zentral im Bild) sowie einen perspektivischen Querschnitt der Lichtkammer 20 (rechts im Bild).

Wie anhand der Anordnung der Lichtquellen 3 zu sehen ist, weist die Trägerplatte 4 ebenfalls ein oktogonales Layout auf, wobei die LEDs jeweils mit einer Seitenfläche bzw. seitlich an der Trägerplatte 4 montiert sind. Aufgrund der seitlichen Montage der LEDs, kann sichergestellt werden, dass die Hauptabstrahlrichtung der LEDs im Wesentlichen parallel zu der Trägerplatte 4 und somit auch parallel zu der Lichtkammer 20 und dem Leuchtkörper 6 ausgerichtet ist. Die Lichtquellen 3 sind zu dem dicht an dem jeweiligen Lichteinlass der Kammersegmente angeordnet, so dass das von den Lichtquellen 3 erzeugte Licht im Wesentlichen vollständig in die Kammersegmente eingespeist wird.

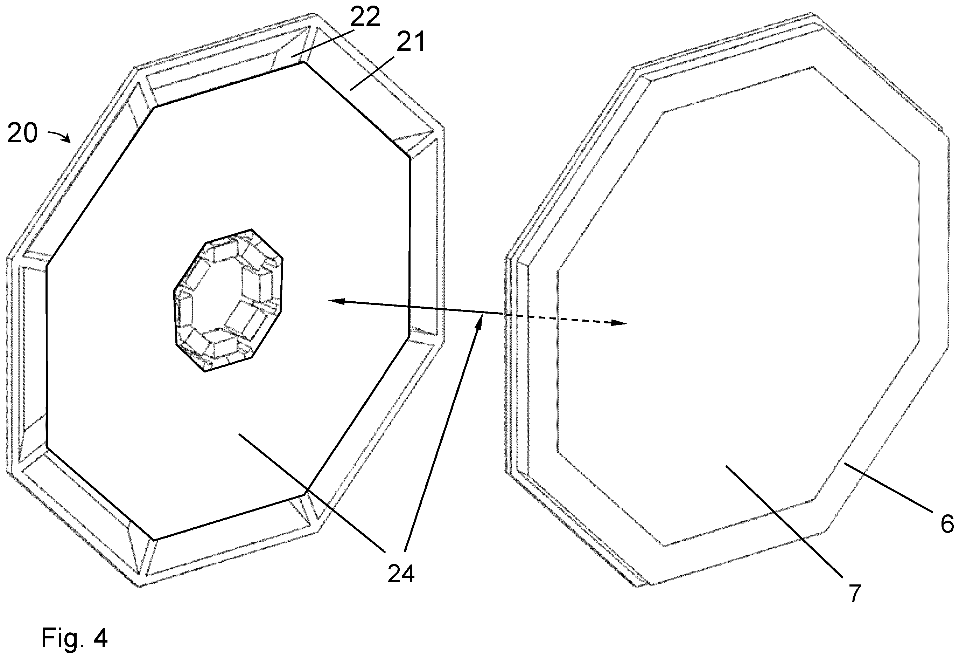

Fig. 4 zeigt eine perspektivische Detailansicht der Leuchtvorrichtung gemäß einem Ausführungsbeispiel. Insbesondere zeigt Fig. 4 die Lichtkammer 20 samt nach innen verspiegeltem Deckel 24 sowie den Leuchtkörper bzw. Diffusor 6 mit einem nichtdurchlässigen Spiegel 7. In einigen Ausführungsbeispielen umfasst der Diffusor 6 eine teilverspiegelte Rückseite auf, welche als nach innen verspiegelter Deckel der Lichtkammer 20 fungieren kann. In einem solchen Fall kann auf eine separate Abdeckung der Lichtkammer 20 verzichtet werden.

In dem in Fig. 4 gezeigten Ausführungsbeispiel ist der Deckel 24 ein Spiegelelement, welches mit nach innen zur Lichtkammer 20 zugewandten verspiegelten Seite die Lichtkammer bildet. In Fig.4 ist daher zur Verdeutlichung der Deckel.24 losgelöst dargestellt, um die Anordnung der Umlenkspiegel 21, der Seitenwände 22 und des Deckels 24 zu verdeutlichen.

In einigen Ausführungsbeispielen ist der Deckel 24 als Teil des Diffusors 6 und/oder eines doppeltseitig verspiegelten Spiegels 7 bzw. Vollspiegels ausgebildet. Insbesondere kann der Spiegel 7 als doppelseitig verspiegelter Spiegel ausgebildet sein, welcher als Deckel 24 fungiert.

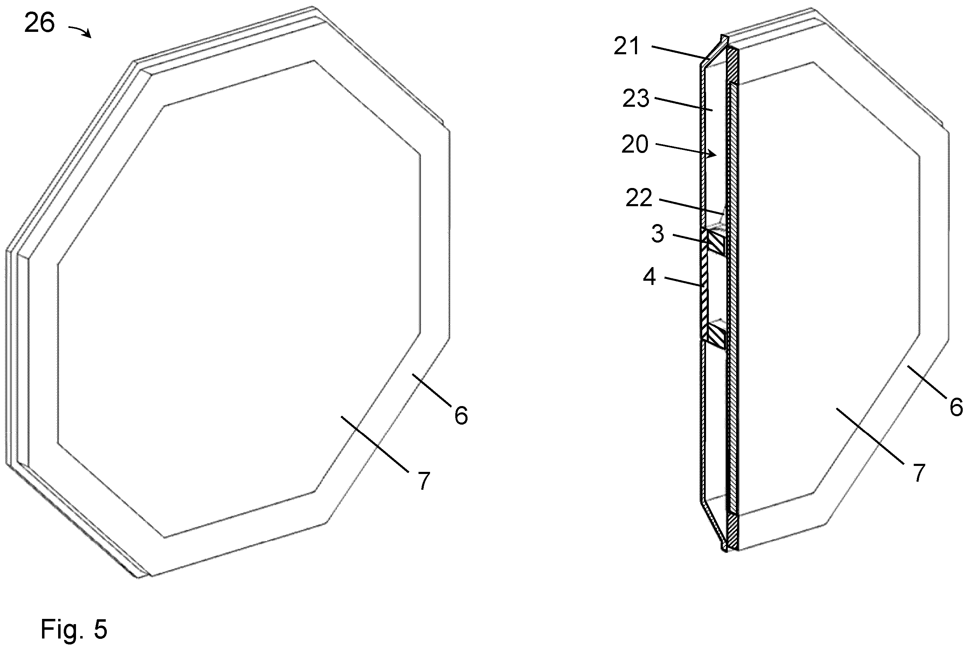

Fig. 5 zeigt eine perspektivische Ansicht einer Lichteinheit gemäß einem Ausführungsbeispiel. Die Lichteinheit 26 umfasst eine segmentierte Lichtkammer 20 sowie einen Leuchtkörper 6 und einen nichtdurchlässigen Spiegel 7. Die Lichtkammer 20 ist insbesondere als segmentierte Lichtkammer 20, ähnlich wie in Fig. 4 gezeigt, ausgebildet. Die Lichteinheit 26 umfasst auch einen Zusammenbau mit Lichtquellen 3, welcher auf einer Trägerplatte 4 seitlich montiert sind, ähnlich wie in Fig. 3 oben gezeigt. Die Lichteinheit 26 kann insbesondere als ein in das Gehäuse 2 einsetzbares Modul ausgebildet sein, so dass in einem Montageschritt mehrere aufeinander abgestimmte Komponenten der Leuchtvorrichtung 1 eingebaut werden können.

Die Darstellung der Fig. 5 macht zudem den flachen Aufbau der Lichteinheit 26 deutlich, was einen besonders flachen bzw. kompakten Aufbau der Leuchtvorrichtung 1 ermöglicht.

Die Lichteinheit 26 kann als separates Subsystem vielseitig in Ihrer Verwendung als Leuchtvorrichtung eingesetzt werden, beispielsweise indem man die Spiegelfläche 7 z. B. gegen eine Schaltfläche (nicht dargestellt) oder ein Display (nicht dargestellt) austauscht.

Zudem kann die Leuchtvorrichtung 1 auf einfache Weise zusammengestellt werden. Beispielsweise kann in einem ersten Schritt der Gehäuseboden 25 des Gehäuses 2 bereitgestellt werden, worauf die Trägerplatte 4 samt Lichtquellen 3 und die Lichtkammer 20 montiert werden können. In einem weiteren Schritt kann die Seitenwand des Gehäuses 2 bereitgestellt und mit dem Diffusor 6 sowie mit dem nichtdurchlässigen Spiegel 7 bestückt werden. Alternativ kann die komplette Lichteinheit 26 gemäß Fig. 5 bereitgestellt werden und auf den Gehäuseboden 25 aufgesetzt bzw. in das Gehäuse 2 eingesetzt werden.

Stirnseitig auf die Seitenwand des Gehäuses 2 kann die Abschlussplatte 9 mit dem teildurchlässigen Spiegel 8 aufgelegt werden. In einem abschließenden Schritt kann die Frontmaske 5 auf das Gehäuse 2 aufgesetzt werden. Dabei kann die Frontmaske 5 auch als Fixierelement zur Fixierung der Abschlussplatte 9 bzw. des teildurchlässigen Spiegels 8 fungieren.

Im Betrieb der Leuchtvorrichtung 1 wird von Lichtquellen 3 Licht zum Anleuchten des Diffusors 6 erzeugt und in die Lichtkammer 20 bzw. in die Kammersegmente eingespeist. Das in die Kammersegmente eingespeiste Licht wird im Wesentlichen verlustfrei zu dem Diffusor 6 geleitet, so dass bestimmte Bereiche, insbesondere am Lichtauslass des jeweiligen Kammersegments gezielt angeleuchtet werden können. Aufgrund der diffusen Eigenschaften des Diffusors 6 verbreitet sich das eingefallene Licht im Inneren des Diffusors und erzeugt ein diffuses Leuchten des Diffusors 6. Dabei strahlt der Diffusor ein diffuses sekundäres Licht ab, wobei die gezielt angeleuchteten Bereiche des Diffusors besonders hell leuchten. Diese verstärkt leuchtenden Bereiche des Diffusors 6 können dann direkt oder indirekt, je nach Ausführung, von außen visuell besser wahrgenommen werden.

Bei einer segmentierten Lichtkammer 20 mit reflektierenden Seitenwänden 22 können auch etwaige von den Seitenwänden 22 reflektierte Lichtstrahlen ebenfalls auf den Diffusor 6 fallen und zum Anleuchten des Diffusors 6 beitragen. Das Licht kann u.a. aus einer der Lichtkammer 20 abgewandten Seite des Diffusors 6 austreten, und zwar aus den Bereichen, welche von dem nichtdurchlässigen Spiegel 7 nicht abgedeckt sind.

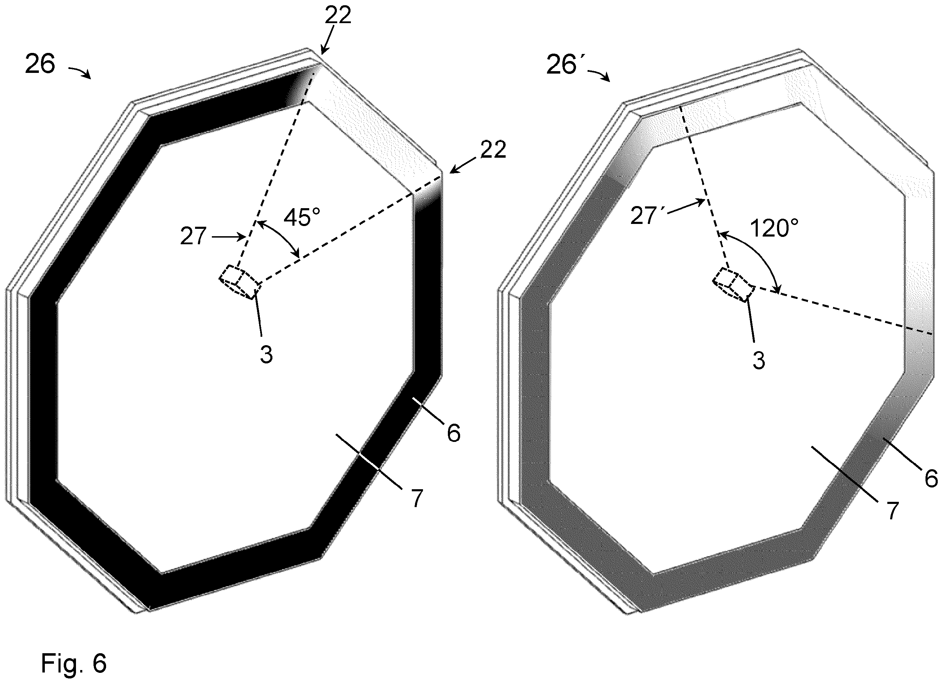

Fig. 6 zeigt eine perspektivische Ansicht einer Lichteinheit gemäß einem anderen Ausführungsbeispiel. Insbesondere zeigt Fig. 6 eine Lichteinheit 26 gemäß Fig. 5 (links im Bild) sowie eine Lichteinheit 26' (rechts im Bild) gemäß dem anderen Ausführungsbeispiel. Zur Verdeutlichung des Unterschieds zwischen den gezeigten Ausführungsbeispielen werden bei den in Fig. 6 gezeigten Ausführungsbeispielen jeweils eine Lichtquelle 3 sowie ein von den Lichtquellen 3 abgedecktes bzw. ausgeleuchtetes Leuchtsegmentbereich 27 bzw. 27' schematisch als gestrichelte Linien dargestellt.

Im Unterschied zu dem Ausführungsbeispiel gemäß Fig. 5 weist das rechts im Bild gezeigte Ausführungsbeispiel der Lichteinheit 26' keine radialen Seitenwände 22 bzw. keine Segmentierung auf, so dass die Lichteinheit 26' im Wesentlichen aus einer einzigen Lichtkammer besteht. Ansonsten sind die beiden Ausführungen weitgehend identisch und können als Lichtbooster fungieren, indem sie den Leuchtkörper bzw. den Randbereich des Diffusors gezielt ausleuchten.

Wie Anhand der Leuchtsegmentbereiche 27 und 27' zu erkennen ist, wird die Breite der Leuchtsegmentbereiche in der linken Ausführungsform durch die radial ausgerichteten Seitenwände 22 festgelegt, vgl. beispielsweise Figuren 2, 3, 4 und 5. Bei der Lichteinheit 26' ohne Segmentierung wird das von der Lichtquelle 3 abgestrahltes Licht seitlich nicht eingeschränkt, so dass die Breite bzw. der Öffnungswinkel des Leuchtsegmentbereichs 27' im Wesentlichen durch die Abstrahlcharakteristik der Lichtquelle 3 gegeben sind.

Im Unterschied zu der segmentierten Variante werden in der Lichteinheit 26' die von unterschiedlichen Lichtquellen 3' bzw. LED-Lichtquellen erzeugten Lichter voneinander nicht scharf abgegrenzt. Diese Ausführung kann insbesondere dann bevorzugt werden, wenn auf die Einfachheit des Aufbaus und auf die Leuchthomogenität und weniger auf die separate Ansteuerbarkeit von unterschiedlichen Diffusor-Segmenten Wert gelegt wird.

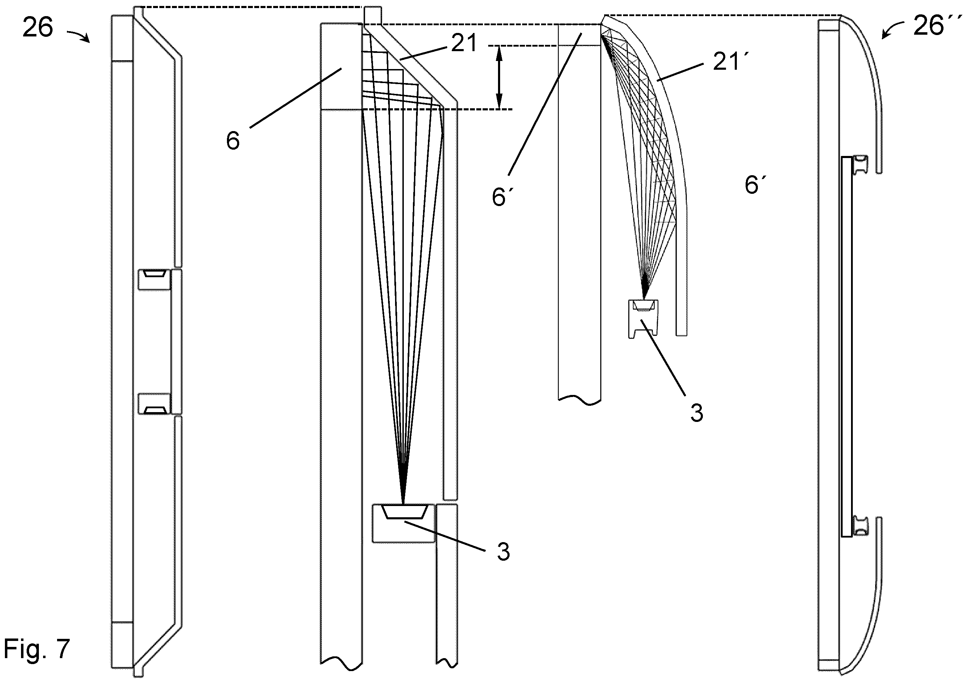

Fig. 7 zeigt eine Querschnittsansicht einer Lichteinheit in zwei unterschiedlichen Ausführungen. Insbesondere zeigt Fig. 7 eine weitere Ausführungsform der Lichteinheit 26" (rechts im Bild) neben der Ausführungsform der Lichteinheit 26 gemäß Fig. 5 (links im Bild) mit jeweiliger schematischer Lichtführung. Die Lichtführung in den Lichteinheiten 26 und 26" wird anhand von exemplarischen Lichtstrahlen verdeutlicht.

Die beiden in Fig. 7 gezeigten Ausführungen der Lichteinheit weisen im Wesentlichen ähnlichen Aufbau auf, in welchem die Lichtquellen 3 radial ausgerichtet sind. Die Ausführungsform der Lichteinheit 26" rechts im Bild weist einen schmaleren Diffusor 6' als die Ausführungsform der Lichteinheit 26 links im Bild auf, was anhand des in Fig. 7 eingezeichneten Doppelpfeils verdeutlicht wird. Zudem weist die rechte Ausführungsform der Lichteinheit 26" einen als Freiformreflektor ausgebildeten Umlenkspiegel 21' auf, wobei der Freiformreflektor dazu ausgebildet ist, das von den Lichtquellen 3 erzeugte Licht gezielt auf den Diffusor 6' zu richten.

Insbesondere kann der Freiformreflektor eine auf die Form bzw. auf die Tiefe der Lichteinheit bzw. der Lichtkammer und/oder des Diffusors angepasste Form aufweisen, um das von den Lichtquellen 3 erzeugte Licht zu erfassen und gezielt auf die Rückseite des Diffusors 6' bzw. Leuchtkörpers zu lenken. Dadurch kann die Lichtausbeute der Leuchtvorrichtung speziell bei größerer Bautiefe bzw. bei schmalen Leuchtkörpern bzw. Leuchtstrukturen erhöht werden. Mittels des als Freiformreflektor ausgebildeten Umlenkspiegels kann somit die Lichtausbeute sowie die Gesamteffizienz der Leuchtvorrichtung erheblich gesteigert werden.

In den oben gezeigten Ausführungsbeispielen wird das von den Lichtquellen 3 erzeugte primäre Licht durch die Lichtkammer 20 zu einem Randbereich des Diffusors 6 in Form eines oktogonalen Rahmens geleitet. Dieser Randbereich des Diffusors 6 ist auf der der Lichtkammer 20 abgewandten Seite des Diffusors 6 von dem nichtdurchlässigen Spiegel 7 nicht abgedeckt. Aus diesem Bereich kann somit das Licht aus dem Diffusor 6 austreten und visuell wahrgenommen werden. Das aus dem Diffusor 6 austretende Licht kann in den Raum zwischen dem nichtdurchlässigen Spiegel 7 und dem teildurchlässigen Spiegel 8 gelangen. Dabei kann wenigstens ein Teil des auf den teildurchlässigen Spiegels 8 einfallenden Lichts durch den teildurchlässigen Spiegel 8 und durch die Abschlussplatte 9 hindurch nach außen gelangen. Somit kann der Diffusor 6 von außen als Leuchtstruktur bzw. als leuchtender Rahmen visuell wahrgenommen werden.

Ein Teil des auf den teildurchlässigen Spiegel 8 einfallenden Lichts kann spiegelreflektiert zurückgeworfen und von dem nichtdurchlässigen Spiegel 7 erneut auf den teilreflektierten Spiegel 8 gelenkt werden. Ein Teil dieses Lichts kann durch den teildurchlässigen Spiegel 8 und durch die Abschlussplatte 9 nach außen gelangen. Auf diese Weise können Abbildungen insbesondere zweiter, dritter und weiterer Ordnungen entstehen, welche von außen visuell wahrnehmbar sind. Durch multiple Reflektionen zwischen den Spiegeln 7 und 8 der Doppelspiegelanordnung entsteht eine Vielzahl von Wiederholungen der Lichtgrafik bzw. Leuchtstruktur mit abnehmender Leuchtdichte innerhalb des inneren Gehäusekanals. Dabei können diese Abbildungen, insbesondere gemäß den Gesetzen der geometrischen Optik, räumlich versetzt zueinander erscheinen, was zu einem Infinity- bzw. Volumen-Effekt führen kann.

In einigen Ausführungsbeispielen sind die Innenwände des Gehäuses 2 wenigstens bereichsweise, insbesondere in dem zwischen dem nichtdurchlässigen Spiegel 7 und dem teildurchlässigen Spiegel schwarz bzw. lichtabsorbierend ausgebildet. Dadurch kann das Streulicht bzw. Hintergrundlicht unterdrückt bzw. reduziert werden, um insbesondere die Abbildungen des Diffusors 6 optisch stärker hervorzuheben.

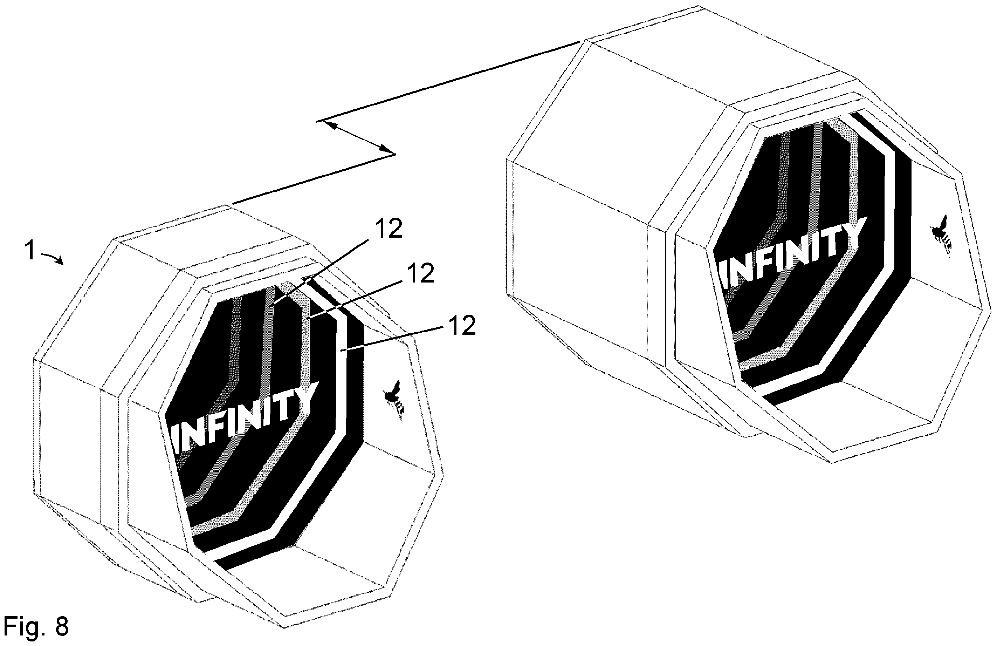

Fig. 8 zeigt eine schematische perspektivische Ansicht einer Leuchtvorrichtung gemäß einem Ausführungsbeispiel im Betrieb. Links im Bild ist eine Leuchtvorrichtung 1 gemäß einem Ausführungsbeispiel mit einer Lichtkammer 20 der oben beschriebenen Art. Rechts im Bild ist eine Leuchtvorrichtung mit einer Lichteinheit mit axial ausgerichteten Lichtquellen gezeigt. Die beiden Leuchtvorrichtungen sind so ausgelegt, dass sie etwa gleiche optische Performance, wie Lichtstrom, Strukturhelligkeit, Leuchthomogenität, etc. aufweisen. Insbesondere stellt Fig. 8 Simulationsergebnisse dar und veranschaulicht den Bauraumgewinn, der mittels der Leuchtvorrichtung 1 erzielt werden kann. In der gezeigten Ansicht sind Abbildungen 12 des Diffusors 6 in Form von koaxial hintereinander angeordneten oktogonalen Ringen sichtbar.

Wird die Leuchtvorrichtung 1 als Innenraum-Leuchtvorrichtung eines Fahrzeugs eingesetzt, so kann die Leuchtvorrichtung 1 von Fahrzeuginsassen aus unterschiedlichen Perspektiven betrachtet werden. Bei Änderung von Augenpositionen der Fahrzeuginsassen ändert sich zwar die Position von Abbildungen, bleibt jedoch aufgrund von Gesetzen der geometrischen Optik die koaxiale Anordnung der Abbildungen erhalten. Bei den Betrachtern entsteht somit die Illusion, dass die Leuchtvorrichtung 1 eine unendliche Tiefe aufweist, und dass im Inneren der Leuchtvorrichtung 1 unendlich viele leuchtende Ringe hintereinander angeordnet sind.

Die vergleichende Darstellung der beiden Leuchtvorrichtungen macht deutlich, dass mit der hier beschriebenen Leuchtvorrichtung die gleiche Performance bei einer deutlich geringen Bautiefe der Leuchtvorrichtung erreicht werden kann.

Es ist anzumerken, dass die hier beschriebenen Leuchtvorrichtungen eine große Gestaltungsfreiheit für Innenraumdesigner bieten. So können sämtliche Komponenten in verschiedenen Varianten ausgeführt sein. Auch das Gehäuse 2 kann eine andere polygonale, kreis oder elliptische Form aufweisen. Zudem können optische Eigenschaften des Diffusors 6, des teildurchlässigen Spiegels 8 und der Abschlussplatte variiert werden. Beispielsweise kann die Transparenz des teildurchlässigen Spiegels 8 vermindert werden, um insbesondere relative Helligkeit von Abbildungen 12 höheren Grades zu erhöhen. So kann beispielsweise bei einer Transparenz von 50 % eine sanfte Helligkeitsabstufung zwischen den Abbildungen unterschiedlichen Grades bei einer verhältnismäßig hohen Gesamtlichtausbeute erzielt werden. Auch die Transmission und/oder die Diffusivität der Abdeckplatte 9 kann als Parameter bei der Auslegung der Leuchtvorrichtung verwendet werden. Die Aufschrift 10 auf der Abschlussplatte 9 sowie das Piktogramm 11 bzw. das Logo auf der Innenwand der Frontmaske 5 sollen insbesondere die designtechnische Gestaltungsmöglichkeiten der Leuchtvorrichtung 1 hervorheben. Die Abschlussplatte 9 mit einer hohen Transmission bzw. eine klare Scheibe als Abschlussplatte 9 insbesondere bei einer hohen Transparenz des teildurchlässigen Spiegels 8 könnte beispielsweise dazu verwendet werden, die Aufschrift 10 quasi als im Raum schwebend erscheinen zu lassen.

Je nach Ausführung kann die Lichtkammer 20 unterschiedlich ausgebildet sein. Insbesondere kann die Lichtkammer den designtechnischen Anforderungen gezielt angepasst werden. So kann der Spalt zwischen dem Deckel 24 und dem Umlenkspiegel unterschiedlich breit ausgebildet sein. Dadurch kann insbesondere die Strukturbreite der Leuchtstruktur vergrößert und die Gesamtlichtausbeute der Leuchtvorrichtung erhöht werden.

Die hier beschriebene Leuchtvorrichtung zeichnen sich durch besonders kompakte und kostengünstige Bauweise aus und bieten neben den deutlich sichtbaren Leuchtstrukturen mit ausgeprägten Volumen- bzw. Unendlichkeitseffekten große designtechnische Gestaltungsfreiheit. Aufgrund der radialen Anordnung der Lichtquellen 3 kann zudem eine besonders geringe Bautiefe der Leuchtvorrichtung erzielt werden.

Im Gegensatz zu den Leuchtvorrichtungen mit axial ausgerichteten Lichtquellen erfolgt die Mischung bzw. Homogenisierung des von den Lichtquellen 3 erzeugten Lichts bei der hier beschriebenen Leuchtvorrichtung im Wesentlichen in radialer Richtung. Die Differenz zwischen dem Außenradius der Lichtkammer und dem Innenradius der Lichtkammer entspricht dabei in etwa der Länge des Lichtpfades der axialen Leuchtmittelanordnung im Stand der Technik. Somit kann der Bauraum hinter der Doppelspiegelanordnung auf ein Minimum reduziert und die Tiefe der Leuchtvorrichtung insgesamt ungefähr um eine Radiuslänge verkürzt werden.

Somit ist auch hier eine ausreichend großer Abstand zum Diffusor gewährleiste, der sich aber nun nicht mehr in axialer Richtung, sondern flach in radialer Ausrichtung erstreckt. Durch die 90°-Drehung bzw. durch die seitliche Montage der Lichtquellen ist zwar die Hauptabstrahlrichtung der Lichtquellen parallel zu der Diffusor-Fläche, jedoch wird anhand der umlaufenden Spiegelschräge bzw. durch den um 45° geneigten Umlenkspiegel ein Großteil des in die Lichtkammer eingespeisten Lichts auf den Diffusor 6 umgelenkt. Dabei erstreckt sich die spiegelnde Oberfläche bzw. vom äußeren Rand des Diffusors bei einer Spiegelneigungswinkel von 45° bis hin zum Innenrand des Diffusors und deckt somit in axialer Richtung den gesamten Diffusor ab. Diese Spiegelschräge läuft nun in eine zum Diffusor coplanare Spiegelscheibe bzw. verspiegelten Boden 23 ein, die parallel zur Hauptachse der Leuchtmittel bis kurz vor dessen Lichteinlass der Lichtkammer 20 erstreckt. Das aus dem Leuchtmittel emittierte Licht wird nun in eine zweiseitige Spiegelkammer eingekoppelt, in der das breit abgestrahlte Licht durch die Spiegelflächen 21, 23, 24 auf die jeweils geneüberliegende Seite reflektiert wird, bis diese im Rand Bereich an dem Lichtauslass auf den 45° Umlenkspiegel trifft, welcher dann das Licht um 90° umlenkt und auf die Diffusor-Fläche leitet.

Mittels der spiegelnden Seitenflächen 21 bzw. radial verlaufenden verspiegelte Rippen, welche die einzelnen Lichtkammersegmente voneinander trennen, können zudem die Leuchtmittel voneinander entkoppelt werden. Somit Lassen sich zu einzelnen Kammersegmenten zugeordnete Leuchtmittel abschalten oder andersfarbig darstellen, ohne dabei die Ausleuchtung von anderen Lichtkammersegmenten bzw. Diffusor-Segmenten zu beeinflussen. Die Leuchtvorrichtung mit der nichtsegmentierten Lichteinheit 26', vgl. Fig. 6 rechts, weist im Vergleich zu der segmentierten Variante weniger Komponenten auf und kann verhältnismäßig einfach und günstig hergestellt werden.

Basiert auf dem hier beschriebenen Konzept können vielseitig einsetzbare Leuchtvorrichtungen bereitgestellt werden. Solche Leuchtvorrichtungen können beispielsweise zum Umleuchten von Schaltflächen, wie Drehknöpfen, Tasten und/oder von Displays verwendet werden.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Leuchtvorrichtung
- 2: Gehäuse
- 3: Lichtquelle
- 4: Trägerplatte
- 5: Frontmaske
- 6: Diffusor
- 6': Diffusor
- 7: Spiegel
- 8: Spiegel
- 9: Abschlussplatte
- 10: Aufschrift
- 11: Piktogramm
- 12: Abbildung

- 20: Lichtkammer
- 21: Umlenkspiegel
- 21': Umlenkspiegel
- 22: Seitenwand
- 23: Boden -Lichtleiter, -Reflektor
- 24: Deckel -Lichtleiter, -Reflektor oder Spiegel
- 25: Gehäuseboden
- 26: Lichteinheit
- 26': Lichteinheit
- 26'': Lichteinheit
- 27: Leuchtsegmentbereich
- 27': Leuchtsegmentbereich

## Patentansprüche

1. Leuchtvorrichtung (1) für einen Innenraum eines Fahrzeugs, umfassend:
- ein Gehäuse (2),
- einen flächigen, im Wesentlichen axialsymmetrisch ausgebildeten, Leuchtkörper (6) mit einer Rückseite und mit einer der Rückseite gegenüberliegenden Vorderseite zum Erzeugen einer Leuchtstruktur innerhalb des Gehäuses (2),
- wenigstens eine Lichtkammer (20) zum Anleuchten der Rückseite des Leuchtkörpers (6), und
- wenigstens eine Lichtquelle (3) zum Erzeugen eines radial gerichteten Lichts zum Einspeisen in die wenigstens eine Lichtkammer (20), wobei die wenigstens eine Lichtkammer (20) wenigstens einen Lichtauslass mit wenigstens einem Umlenkspiegel (21) zum Umlenken des in die wenigstens eine Lichtkammer (20) eingespeisten Lichts in Richtung des Leuchtkörpers (6) umfasst, so dass der Leuchtkörper lokal angeleuchtet werden kann.

2. Leuchtvorrichtung nach Anspruch 1, wobei der Umlenkspiegel (21) wenigstens abschnittsweise als Freiformreflektor zum gezielten Ausleuchten des Leuchtkörpers (6) ausgebildet ist.

3. Leuchtvorrichtung nach Anspruch 1 oder 2, wobei der Umlenkspiegel (21) wenigstens abschnittsweise in Form einer Spiegelschräge ausgebildet ist, und wobei die Spiegelschräge wenigstens eine zum flächigen Leuchtkörper (6) um ca. 45°-Winkel geneigte Spiegelfläche umfasst.

4. Leuchtvorrichtung nach einem der vorhergehenden Ansprüche, wobei die wenigstens eine Lichtkammer (20) einen nach innen verspiegelten Boden (23) und einen dem verspiegelten Boden (23) gegenüberliegenden nach innen verspiegelten Deckel (24) umfasst.

5. Leuchtvorrichtung nach einem der vorhergehenden Ansprüche, wobei die wenigstens eine Lichtkammer (20) eine Anzahl von radialen Kammersegmenten mit jeweils einem Lichteinlass an einem inneren Ende und mit jeweils einem Lichtauslass an einem äußeren Ende umfasst.

6. Leuchtvorrichtung nach Anspruch 5, wobei die Kammersegmente im Wesentlichen radial ausgerichtete nach innen verspiegelte Seitenwände (22) aufweisen.

7. Leuchtvorrichtung nach einem der Ansprüche 5 oder 6, wobei die Leuchtvorrichtung eine Anzahl von Lichtquellen umfasst, und wobei die Lichtquellen (3) einzeln oder gruppenweise den jeweiligen Lichteinlässen zugeordnet sind.

8. Leuchtvorrichtung nach Anspruch 7, wobei die Leuchtvorrichtung wenigstens ein Lichtquellencluster mit mehreren Lichtquellen umfasst, wobei zu unterschiedlichen Lichteinlässen zugeordnete Lichtquellen auf einer gemeinsamen Trägerplatte (4) montiert sind.

9. Leuchtvorrichtung nach einem der vorhergehenden Ansprüche, wobei die Leuchtvorrichtung (1) eine Doppelspiegelanordnung (7,8) umfasst, und wobei die Doppelspiegelanordnung (7,8) derart ausgebildet ist, dass die Leuchtstruktur an unterschiedlichen Tiefenebenen innerhalb des Gehäuses (2) mehrfach erscheinen kann.

10. Leuchtvorrichtung nach Anspruch 9, wobei die Doppelspiegelanordnung (7,8) einen im Wesentlichen nichttransparenten bzw. lichtundurchlässigen Spiegel mit einer der wen Lichtquellen abgewandten Spiegeloberfläche umfasst.

11. Fahrzeug, wobei das Fahrzeug wenigstens einen Innenraum mit wenigstens einer Leuchtvorrichtung (1) nach einem der vorhergehenden Ansprüche zur lichttechnischen Gestaltung des Innenraums des Fahrzeugs aufweist.
